# EUROPEAN PATENT APPLICATION

(11) **EP 2 818 858 A2**
(43) Date of publication of application: **31.12.2014**
(21) Application number: 14173168.7
(22) Date of filing: 19.06.2014
(51) Int. Cl.: G01N 29/04, G01N 29/07, G01N 29/22, G01N 29/24, G01N 29/30

(54) **Method and apparatus for measuring deformation of non- metallic materials**

(30) Priority: 19.06.2013 US 201361836924 P; 20.02.2014 US 201461942458 P
(71) Applicant: Weatherford/Lamb, Inc., Houston, TX 77056 (US)
(72) Inventor: Slay, Jeremy Buc, Fort Worth, TX 76109 (US); Lawrey, Martin W., Joshua, TX 76058 (US); Tello, Lucio Nelson, Benbrook, Texas 76126 (US)
(74) Representative: Talbot-Ponsonby, Daniel Frederick

(57) **Abstract**

A method for measuring the deformation of elastomeric materials using acoustic signals involves obtaining a sample, positioning the sample in a sealable chamber, sealing the chamber, and setting a temperature and pressure inside the chamber. A test fluid may be introduced to the chamber. An acoustic signal is used to measure a characteristic of the sample, such as a dimension or a modulus. Repeated measurements may be made overtime to monitor changes in the sample in response to temperature and pressure. The acoustic signal may be generated by an acoustic transducer including a backing component including a fluorine-containing polymer in which metal particles are incorporated. The sample may be a non-metallic material. Conditions inside the chamber may be set to simulate a wellbore environment.

## Description

### INCORPORATION BY REFERENCE

This application incorporates by reference, in their respective entirety, the following patent applications: U.S. Provisional Pat. App. No. 61/836924, filed in the USPTO on June 19, 2013 (Attorney Docket No. WEAT/1123USL), and U.S. Provisional Pat. App. No. 61/942458, filed in the USPTO on February 20, 2014 (Attorney Docket No. WEAT/1186USL).

### BACKGROUND

### Field of the Invention

The present invention generally relates to an apparatus and method for measuring deformation of non-metallic materials using acoustic signals.

### Description of the Related Art

In oil and gas extraction, it is often desirable during completion or operation of a wellbore to isolate different geologic zones from each other. For example, the wellbore may pass through water-infiltration zones, gas-producing formations, and oil-producing formations, and it may be preferable to produce from different zones in specific sequences or using different recovery methods in each zone. This requires wellbore segments to be isolated from each other.

A typical means of isolating wellbore segments uses a "packer." A completed wellbore generally comprises a series of concentric structures, including the wellbore/formation wall, casings, liners, and production tubing, and a packer can be deployed downhole and between a pair of concentric structures. Once positioned, the packer expands (or is expanded) to create a seal between adjacent structures to thereby prevent mixing of fluids from above and below the seal.

Generally, to fit down the wellbore, the packer must have an initial dimension less than the radial cross-section being sealed, but after positioning the packer must somehow expand (or alter shape) to fill the cross-section. There are various packer types, including mechanical packers, swellable packers, inflatable packers, and shape-memory packers. All of these packer types generally incorporate polymeric materials to make the seal between the pair of concentric structures.

A mechanical packer expands by applying physical pressure, for example by squeezing a polymeric material placed between an upper plate and lower plate such that the material extrudes from between the plates in a radial direction. Here, mechanical force is used to cause a physical deformation of the polymer.

A swellable packer relies on the phenomenon of polymeric swelling upon exposure to certain solvents/chemicals. It is well-known that certain solvents will dissolve some materials, but not others. Swelling of polymers is a related phenomenon as swelling occurs when solvent molecules penetrate into the polymer and thereby cause the polymeric structure to expand. Like with dissolution, certain chemicals will swell some polymers but not others. For example, butyl rubber will swell significantly in a hydrocarbon solvent like cyclohexane but is effectively inert to water.

With a swellable packer, the packer is positioned in its initial (unswollen) state in the wellbore and then exposure to the downhole environment causes the material of the packer to deform by swelling. The amount of expansion depends on the specific packer material being used, the downhole chemical environment, the temperature, and the pressure. Here, the downhole chemical environment may be a hydrocarbon-rich phase (e.g., petroleum) or an aqueous-rich phase (e.g., a brine solution), and the packer material must be selected accordingly.

Inflatable packers are deployed in an un-inflated state. Once positioned, a pressurizing fluid (liquid or gas) is used to inflate the packer, much like a balloon or an inner tube. The inflation process causes the packer to expand to thereby create the seal. The amount of deformation/expansion for an inflatable packer depends on the differential pressure applied to packer and the material forming the packer.

A shape-memory packer responds to some triggering event (e.g., change in temperature) to alter shape. Upon the triggering event, the packer alters its shape to form the required seal.

Also known are expandable tools, such as liner hangers, that rely on, for example, a wedge/cone system that plastically deforms a mandrel and polymer system to form the required seal. The polymeric portions of these tools are generally very similar to packer materials.

Whichever packer type is selected, it is generally important to understand the response of the packer material to the conditions experienced downhole. For example, an elastomeric material used in a mechanical packer may also swell due to its chemical environment or a shape-memory polymer may not retain the required shape past a given temperature. Also, the elastomeric material may eventually breakdown under constant exposure to a harsh environment. Thus, it is required to study the materials under conditions that match or at least substantially approximate actual conditions experienced during usage, particularly the harsh conditions experienced in a wellbore. The chemical environment experienced downhole can be a function of temperature and pressure as well as the various chemical components present downhole. The chemical components may be liquids, gases, or even solids (such as colloid suspensions) or combinations thereof.

Current methods for measuring the deformation of non-metallic materials used in packers and expandable tools are generally unable to measure deformation under conditions that match actual temperature, pressure, and chemical environment conditions found downhole in a wellbore.

Various mechanical measurement techniques are known, but mechanical devices with moving pieces are inherently susceptible to corrosive or abrasive conditions. For example, the measurement environment may be a saltwater environment, which would be corrosive to certain metals. The measurement environment may also be a fluid with many suspended particulates, such as sand or drilling mud. Additionally, mechanical devices must make physical contact with the test sample. Where the mechanical device makes contact, local test conditions are altered as the sample is no longer fully exposed to the chemical environment because the mechanical device covers a portion of the sample. Thus, there remains a need in the art for methods allowing measurements of the deformation of non-metallic materials under conditions which correspond to actual usage conditions, for example, at high temperatures and pressures in varied chemical environments.

An acoustic transducer deployed down a wellbore will typically be exposed to harsh conditions. Temperatures and pressures may be elevated well above those typically found at the surface level. The chemical environment may be corrosive to metals and the transducer may be exposed to physical abrasives (e.g., entrained sand or aggregate). Additionally, the conditions may vary significantly with depth and/or time such that the transducer must be able to withstand, for example, both brine and hydrocarbon-rich conditions found in different segments of the wellbore. Therefore, a sensor which is to be operated in a wellbore environment must be able to operate in these conditions while also being robust against physical shocks and abrasions associated with down-hole deployment.

To provide protection against harsh down-hole conditions, acoustic transducers are typically encased in an epoxy resin material. Epoxy resins can provide physical protection while still permitting the acoustic signal generated by the transducer to be transmitted to (and/or received from) wellbore components. Although epoxy resins can be selected to be stable against expected thermal and chemical conditions, they may still gradually fail due to accumulated stresses caused by thermal cycling events.

When the encasing material fails, the transducer components will likely also fail due to exposure to harsh wellbore conditions. Thus, there is need to provide acoustic transducer components that are more stable during thermal cycling events.

### SUMMARY

Embodiments include methods and apparatus allowing deformation of non-metallic materials to be measured under conditions which correspond to high temperature, high pressure environments found in wellbores.

An embodiment of a method for measuring deformation of a non-metallic material includes obtaining a sample (also referred to as a specimen) of a non-metallic material, and then placing the sample in a sealable chamber. The sealable chamber can then be sealed. The interior of the sealable chamber can be brought to a test pressure and a test temperature and, a test media (e.g., chemical components whether liquid, solids, gases, or combinations thereof) can be introduced into the sealable chamber. The interior conditions (e.g., temperature, pressure, presence of chemical components) of the sealable chamber can be set to approximate a downhole environment. A generated acoustic signal can be used to measure a characteristic of the sample, such as a dimension or a modulus.

An embodiment of an apparatus for measuring deformation of a non-metallic material includes a sealable chamber and a sample holder for holding a sample of a non-metallic material inside the sealable chamber. An acoustic transducer is positioned to supply an acoustic signal to the sample in the sample holder when the sealable chamber is sealed. The sealable chamber can include means allowing the sealable chamber to be brought to a test pressure and a test temperature, as well as means allowing a test media (e.g., chemical components whether liquid, solids, gases, or combinations thereof) to be introduced into the sealable chamber.

Another embodiment of an apparatus for measuring deformation of an elastomer includes a sealable chamber and a sample holder for holding a sample of a non-metallic material inside the sealable chamber. Also included are a temperature control system for controlling a temperature of the sealable chamber and a pressure control system for controlling a pressure of the sealable chamber. The sealable chamber can include a port (or ports) for introducing and/or removing chemical components (e.g., gases, liquids, solids, or combinations thereof). An acoustic transducer is positioned to supply an acoustic signal to the sample in the sample holder when the sealable chamber is sealed.

A method and apparatus for measuring the deformation of non-metallic materials using acoustic signals is described. The method involves obtaining a sample, positioning the sample in a sealable chamber, sealing the chamber, and setting a temperature and pressure inside the chamber. A test fluid (also referred to as a test medium) may be placed in the chamber. The combination of temperature, pressure, and test fluid may approximate a downhole environment. A characteristic of the sample is measured using an acoustic signal. The characteristic of the sample may, for example, be a dimension or a modulus. Repeated measurements on the sample may be made over time so as to monitor changes in the sample in response to temperature and pressure, for example. The acoustic signal may be in the ultrasonic range. The sample may be, for example, a polymer used in wellbore packer devices.

In another embodiment, a method of measuring deformation of a non-metallic material includes obtaining a sample of a non-metallic material; placing the sample in a sealable chamber; sealing the sealable chamber; generating an acoustic signal; adjusting the sealable chamber to approximate a downhole condition; and measuring a characteristic of the sample using the acoustic signal. In yet another embodiment, the downhole condition is selected from the group consisting of a downhole pressure, a downhole temperature, a downhole medium, and combinations thereof.

In an embodiment of an acoustic transducer, the transducer includes a piezoelectric element configured to generate acoustic signals according to an applied electrical signal. A backing component in the acoustic transducer contacts a back-side surface of the piezoelectric element. An encasing material surrounds the piezoelectric element and the backing component. The backing component comprises a polymer, such as a fluoropolymer, which may be a fluoroelastomer, in which metal particles have been incorporated, and the metal particles may comprise greater than 60% of the backing component by volume. In some embodiments, the metal may be tungsten and the polymer may be an elastomer with vinylidene fluoride (VDF) and hexafluoropropylene (HFP) as components.

In a method of manufacturing an acoustic transducer, the steps include: placing a metal powder on a surface of a polymer, such as a fluoroelastomer; mixing the metal powder into the polymer; forming the polymer now including the metal powder into a backing component; and affixing the backing component formed of the polymer including the metal powder to a piezoelectric material. In some embodiments, the metal powder may include tungsten and the polymer may be a fluoroelastomer including vinylidene fluoride (VDF) and hexafluoropropylene (HFP) as components.

In still another embodiment, a method of measuring a characteristic of a downhole device or environment, comprises placing an acoustic transducer in a wellbore; and using the acoustic transducer to measure a characteristic of a portion of the downhole device or environment, wherein the acoustic transducer comprises: a piezoelectric element configured to generate acoustic signals according to an electrical signal that is applied to the piezoelectric element; a backing component contacting a back-side surface of the piezoelectric element; and an encasing material that surrounds the piezoelectric element and the backing component, wherein the backing component comprises a fluorine-containing polymer as described herein in which metal particles are incorporated, and the metal particles comprise greater than 60% of the backing component by volume.

### BRIEF DESCRIPTION OF THE DRAWINGS.

Figure 1 depicts an acoustic transducer in a cross-sectional view.
Figure 2 depicts an acoustic transducer deployed in a wellbore environment.
Figure 3 depicts a backing material used in an acoustic transducer.
Figure 4 depicts a process flow for fabricating an acoustic transducer
Figure 5 depicts a process flow for measuring deformation of a material.
Figure 6 depicts a measurement result from a sample.
Figure 7 depicts measurement results from a sample over a period of time.
Figure 8a depicts an apparatus for measuring deformation of a material.
Figure 8b depicts an example of a sample holder that can be used in an apparatus for measuring deformation of a material.
Figure 9 depicts another example of a sample holder that can be used in an apparatus for measuring deformation of a non-metallic material. Also depicted is a possible arrangement of acoustic sensors.
Figure 10a depicts a portion of another embodiment of an apparatus for measuring deformation of a sample.
Figure 10b depicts a sample cup used in an embodiment of an apparatus for measuring deformation of a sample.
Figure 11 depicts a reference half shelf which may be incorporated in an apparatus for measuring deformation of a sample.

### DETAILED DESCRIPTION OF EXAMPLE EMBODIMENTS

In the following description, numerous details are included in reference to example embodiments presented to aid understanding of the present disclosure. However, it will be apparent to one skilled in the art that many of these specific details may be varied without departing from the scope of the present invention. In other instances, description of features well-known in the art may have been omitted to aid understanding of the present disclosure.

Non-metallic materials used in packers and expandable tools can include polymers, rubbers, plastics, foams, and the like. As used herein, non-metallic materials may refer to any material that is not a metal. These materials must generally change shape and/or dimension after they are deployed downhole to provide a seal between wellbore segments. The change in shape and/or dimension may be referred to as "deformation."

The amount of change after deployment is an important parameter, as is the speed with which the change occurs. If the material expands/changes too little, then sealing might not occur. If the material expands/changes too much, then unwanted stresses may be placed on wellbore structures.

While absolute dimension change is important, the speed with which the change occurs has practical consequences relating to potential production delays. If the packer expands too quickly (i.e., before it is properly positioned), then well completion may be inadvertently hindered by a misplaced expanded packer. If the packer expands too slowly, then well completion may be delayed until the seal is formed.

Additionally, deployed materials may degrade with time and cause seal failures, therefore methods and devices for monitoring and/or studying these materials in conditions that approach or match actual usage conditions are required.

Polymeric materials can have a wide variety of chemical formulations that, with seemingly minor differences, will produce significantly different responses to the same conditions. While polymers can have various chemical compositions, polymeric materials also have properties which vary with other things like molecular weight, extent of cross-linking, and the method of polymerization. It is not uncommon for a polymer to have properties that vary significantly batch-to-batch even though the material is nominally the same composition in each instance.

### Acoustic Transducer

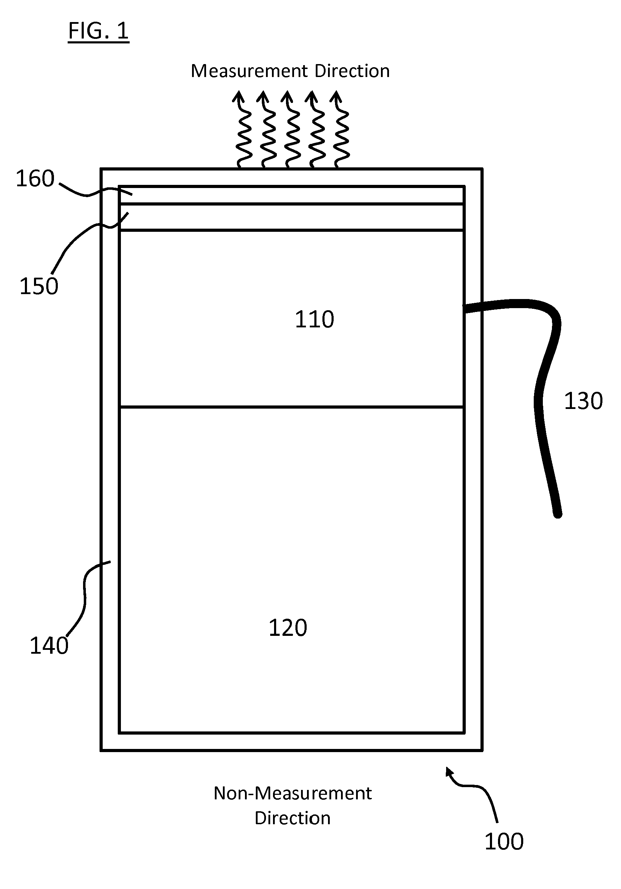

As depicted in Fig. 1, an acoustic transducer 100 for use in an embodiment of the present disclosure includes a piezoelectric element 110 attached to a backing component 120. The piezoelectric element 110 has a wire lead 130. Piezoelectric element 110 and backing component 120 are encased by a coating 140.

Piezoelectric element 110 comprises a material, such as barium titanate (BaTiO₃), which varies in size in response to an applied electrical current. This response is generally referred to as an inverse piezoelectric effect. Application of an alternating current (via wire lead 130) can cause the piezoelectric element 110 to rapidly fluctuate in size and thereby generate sound waves (depicted as arrows in Fig. 1) emitted by acoustic transducer 100.

Piezoelectric element 110 also generates an electric current in response to being compressed. This response is generally referred to as a piezoelectric effect. When an acoustic wave impinges on acoustic transducer 100, piezoelectric element 110 generates an electric current due to compression by the acoustic wave. Thus, in this example embodiment, piezoelectric element 110 can both generate an acoustic signal and detect a return acoustic signal.

In other embodiments, the generation of an acoustic signal and the detection of acoustic signals may occur in separate piezoelectric elements. These separate piezoelectric elements may be in different acoustic transducers 100 or within the same acoustic transducer 100. Furthermore, piezoelectric element 110 can be divided into multiple portions, such that one or more portion generates acoustic signals and another portion or portions respond to acoustic signals.

In general, piezoelectric element 110 can be operated to produce a range of acoustic frequencies or a single frequency. In general, it is preferable for the acoustic transducer 100 to have a wide range of possible operating frequencies. The operating frequency (or operating frequency band) may be adjustable or fixed. The operating frequency may controllable by external control systems (not specifically depicted in Fig. 1) providing control signals along wire lead 130.

In this example embodiment, the acoustic transducer 100 operates at ultrasonic frequencies. Ultrasonic frequency, for the purposes of this specification, may be considered to be frequencies greater than 20 kHz (kilohertz) up to several gigahertz. In other embodiments, the acoustic transducer may operate at any frequency appropriate to the materials being measured or the materials through which the sound waves are being transmitted.

Wire lead 130 is an electrically conductive material for transmitting electric signals to and from the piezoelectric element 110. Wire lead 130 may comprise multiple wires electrically insulated from one another such that distinct signals or voltages may travel along wire lead 130. In some embodiments, multiple wire leads 130 may be provided.

As depicted in Fig. 1, wire lead 130 is connected at a side portion of piezoelectric element 110, but the connection may be at any appropriate surface *(e.g.,* the surface between piezoelectric element 110 and backing component 120 may be the connection point). Wire lead 130 may also be connected to the outward facing surface, though this may interfere with the transmission and reception of acoustic signals, so is not typically preferred. The wire lead 130 may also be routed through the backing component 120 before exiting the encasing material 140, rather than being routed directly from the piezoelectric element 110 as depicted in Fig. 1. Additionally, wire lead 130 may be formed as a contact terminal on an outer surface of encasing material 140 rather than a wire extending substantially past encasing material 140.

Backing component 120 contacts piezoelectric element 110. In general, backing component 120 is positioned on a side of piezoelectric element 110 that is opposite the side from which acoustic signals are transmitted from acoustic transducer 100. The expansion and contraction of piezoelectric element 110 in response to an applied electrical signal cause the generation of sound waves in a non-directional manner. That is, sound waves from piezoelectric element 110 are output in what can be referred to as the measurement direction and also in the opposite (non-measurement) direction into backing component 120. Sound waves from piezoelectric element 110 may also be output in lateral directions or oblique to the intended measurement direction. Backing component 120 is intended to dissipate/absorb sound waves transmitted in the non-measurement direction. Backing component 120 thus prevents unwanted reflections and interference caused by sound waves from piezoelectric element 110 transmitted in the non-measurement direction.

Backing component 120 provides acoustical dampening of the sound waves transmitted from piezoelectric element 110 in the non-measurement direction, but, for the reasons discussed above, should have a coefficient of thermal expansion (in the intended operating temperature range) that matches or nearly matches the coefficient of thermal expansion of the encasing material 140. For example, the backing component 120 should have a coefficient of thermal expansion that is within 15% of the coefficient of thermal expansion of the encasing material 140; preferably, within 8%; and more preferably, within 3%.

In this example embodiment, backing component 120 comprises a fluoropolymer material impregnated (mixed) with tungsten particles. The mixing of tungsten particles with the fluoropolymer can be accomplished by any means available. For example, if the fluoropolymer is melt-processable, the particles can be added to a melt including the fluoropolymer before molding/processing into the backing component 120 shape. When the fluoropolymer is available as a powder, the mixing could be a dry mixing of powders, before molding/processing into the backing component 120 shape. Fluoropolymer could be spray coated onto the tungsten, then molded into shape. When using a fluoroelastomer, mixing could be done on a milling machine, internal mixer, or screw-type mixer.

The tungsten particles may comprise greater than 60% (by volume) of the backing component 120. The tungsten particles may comprise greater than 65% (by volume) of the backing component 120. The tungsten particles may comprise between 65 - 70% (by volume) of the backing component 120. The tungsten particles may comprise greater than 70% (by volume) of the backing component 120. In yet another embodiment, the tungsten particles may comprise greater than 40% (by volume), greater than 50% (by volume), or greater than 55% (by volume) of the backing component 120. It is contemplated that the backing component 120 may incorporate any suitable amount of tungsten particles, other suitable metal particles, or combinations thereof such that the backing component 120 has a coefficient of thermal expansion that is within 15% of the coefficient of thermal expansion of the encasing material 140; preferably, within 8%; and more preferably, within 3%. The tungsten particles may be of two or more nominal sizes (diameters) to enhance packing efficiency. A material other than tungsten may be incorporated in addition to or instead of tungsten. For example, gold particles may be incorporated into backing component 120. High-density (e.g., approximately the specific gravity of tungsten particles or higher) particles of any type material may be incorporated into the polymer material of backing component 120.

The backing material used in backing component 120 for supporting the crystal (piezoelectric element 110) has a great influence on the performance of an acoustic transducer. Using a backing material with acoustic impedance similar to that of the piezoelectric element 110 will provide the widest operating frequency "bandwidth" for the transducer and will generally provide higher sensitivity (*i.e.,* allow detection of lower amplitude return signals).

A backing material that matches the acoustic impedance of the piezoelectric element 110 is preferred and, in general, the closer the acoustic impendence of the backing material to the piezoelectric element 110, the better the performance of the acoustic transducer. In an actual device, a difference between acoustic impedance of piezoelectric element 110 and acoustic impedance of the backing component 120 may be on the order of 10%, with the backing component 120 typically having the lower acoustic impedance of the two components.

As an example of the acoustic impedance values in an embodiment, when lead-metanoibate ceramic is used as a piezoelectric material, the piezoelectric element 110 has an acoustic impedance of approximately 20 MRayls (20 x 10⁶ Rayls). When lead-titanate-zirconate is used as a piezoelectric material, the piezoelectric element 110 has an acoustic impedance of approximately 30 MRayls. Thus, the backing component 120 preferably has an acoustic impedance equal to or approaching 20 MRayls when lead-metanoibate ceramic is used as a piezoelectric material and equal to or approaching approximately 30 MRayls when lead-titanate-zirconate is used as a piezoelectric material.

A Rayl as used herein has the base units (kg/(s • m²)). MRayl = 1 x 10⁶ Rayls.

The acoustic transducer 100 may also include a impedance matching layer 150 to provide a transition between piezoelectric element 110 and the outside of the transducer (for example, a material contacted by the transducer in a contact mode, such as a steel pipe wall). The matching layer may be comprised of multiple layers and/or a composite material. The matching layer may comprise any material having acoustic impedance between the piezoelectric element 110 and the intended measurement environment. In some embodiments, the matching layer may be a ceramic material, a rubber material, or an epoxy material. The matching layer may incorporate metallic particles into such materials. A wear plate 160 may also be incorporated into acoustic transducer 100 in some embodiments. The wear plate 160 protects transducer components from abrasion or other physical damage.

The impedance matching layer 150 may preferably have a thickness which corresponds to 1/4 of the desired output wavelength of the acoustic signal. A 1/4 wavelength thickness allows waves that are reflected within the matching layer 150 to be in phase with the primary (un-reflected) signal. Matching layer 150 may have any suitable thickness and is not necessarily limited to quarter-wavelength thickness. If a range of acoustic signals are to be output, the matching layer 150 may be sized for either a specific wavelength of interest or according to a midpoint of some portion of the intended output range, for example. The impedance matching layer 150 is preferably placed between the piezoelectric element 110 and the output face of the acoustic transducer 100.

The material of the matching layer 150 is preferably selected to provide a transition from the acoustical impedance of piezoelectric element 110 and the material outside the transducer. Avoiding too abrupt of a transition in acoustical impedance help prevents unwanted reflections of the output signal at the output interface and generally improves output signal strength.

For contact transducers, the matching layer 150 can be made from a material that is between an acoustical impedance of the piezoelectric element 110 and the intended contacted material (e.g., steel of a steel pipe). Immersion transducers may have a matching layer 150 with an acoustical impedance between the piezoelectric element 110 and the immersion fluid (e.g., water or oil). Immersion transducers may incorporate an encasing material 140 that prevents or limits fluid infiltration.

Piezoelectric element 110 comprises a material, such as barium titanate (BaTiO₃), which varies in size in response to an applied electrical current. This response is generally referred to as an inverse piezoelectric effect. Application of an alternating current (via wire lead 130) can cause the piezoelectric element 110 to rapidly fluctuate in size and thereby generate sound waves (depicted as arrows in Fig. 1) emitted by acoustic transducer 100.

Piezoelectric element 110 also generates an electric current in response to being compressed. This response is generally referred to as a piezoelectric effect. When an acoustic wave impinges on acoustic transducer 100, piezoelectric element 110 generates an electric current due to compression by the acoustic wave. Thus, in this example embodiment, piezoelectric element 110 can both generate an acoustic signal and detect a return acoustic signal.

In other embodiments, the generation of an acoustic signal and the detection of acoustic signals may occur in separate piezoelectric elements. These separate piezoelectric elements may be in different acoustic transducers 100 or within the same acoustic transducer 100. Furthermore, piezoelectric element 110 can be divided into multiple portions, such that one or more portion generates acoustic signals and another portion or portions respond to acoustic signals.

In general, piezoelectric element 110 can be operated to produce a range of acoustic frequencies or a single frequency. In general, it is preferable for the acoustic transducer 100 to have a wide range of possible operating frequencies. The operating frequency (or operating frequency band) may be adjustable or fixed. The operating frequency may controllable by external control systems (not specifically depicted in Fig. 1) providing control signals along wire lead 130.

In this example embodiment, the acoustic transducer 100 operates at ultrasonic frequencies. Ultrasonic frequency, for the purposes of this specification, may be considered to be frequencies greater than 20 kHz (kilohertz) up to several gigahertz. In other embodiments, the acoustic transducer may operate at any frequency appropriate to the materials being measured or the materials through which the sound waves are being transmitted.

Wire lead 130 is an electrically conductive material for transmitting electric signals to and from the piezoelectric element 110. Wire lead 130 may comprise multiple wires electrically insulated from one another such that distinct signals or voltages may travel along wire lead 130. In some embodiments, multiple wire leads 130 may be provided.

As depicted in Fig. 1, wire lead 130 is connected at a side portion of piezoelectric element 110, but the connection may be at any appropriate surface *(e.g.,* the surface between piezoelectric element 110 and backing component 120 may be the connection point). Wire lead 130 may also be connected to the outward facing surface, though this may interfere with the transmission and reception of acoustic signals, so is not typically preferred. The wire lead 130 may also be routed through the backing component 120 before exiting the encasing material 140, rather than being routed directly from the piezoelectric element 110 as depicted in Fig. 1. Additionally, wire lead 130 may be formed as a contact terminal on an outer surface of encasing material 140 rather than a wire extending substantially past encasing material 140.

Backing component 120 contacts piezoelectric element 110. In general, backing component 120 is positioned on a side of piezoelectric element 110 that is opposite the side from which acoustic signals are transmitted from acoustic transducer 100. The expansion and contraction of piezoelectric element 110 in response to an applied electrical signal cause the generation of sound waves in a non-directional manner. That is, sound waves from piezoelectric element 110 are output in what can be referred to as the measurement direction and also in the opposite (non-measurement) direction into backing component 120. Sound waves from piezoelectric element 110 may also be output in lateral directions or oblique to the intended measurement direction. Backing component 120 is intended to dissipate/absorb sound waves transmitted in the non-measurement direction. Backing component 120 thus prevents unwanted reflections and interference caused by sound waves from piezoelectric element 110 transmitted in the non-measurement direction.

Backing component 120 provides acoustical dampening of the sound waves transmitted from piezoelectric element 110 in the non-measurement direction, but, for the reasons discussed above, should have a coefficient of thermal expansion (in the intended operating temperature range) that matches or nearly matches the coefficient of thermal expansion of the encasing material 140. For example, the backing component 120 should have a coefficient of thermal expansion that is within 15% of the coefficient of thermal expansion of the encasing material 140; preferably, within 8%; and more preferably, within 3%.

In this example embodiment, backing component 120 comprises a fluoropolymer material impregnated (mixed) with tungsten particles. The mixing of tungsten particles with the fluoropolymer can be accomplished by any means available. For example, if the fluoropolymer is melt-processable, the particles can be added to a melt including the fluoropolymer before molding/processing into the backing component 120 shape. When the fluoropolymer is available as a powder, the mixing could be a dry mixing of powders, before molding/processing into the backing component 120 shape. Fluoropolymer could be spray coated onto the tungsten, then molded into shape. When using a fluoroelastomer, mixing could be done on a milling machine, internal mixer, or screw-type mixer.

The tungsten particles may comprise greater than 60% (by volume) of the backing component 120. The tungsten particles may comprise greater than 65% (by volume) of the backing component 120. The tungsten particles may comprise between 65 - 70% (by volume) of the backing component 120. The tungsten particles may comprise greater than 70% (by volume) of the backing component 120. In yet another embodiment, the tungsten particles may comprise greater than 40% (by volume), greater than 50% (by volume), or greater than 55% (by volume) of the backing component 120. It is contemplated that the backing component 120 may incorporate any suitable amount of tungsten particles, other suitable metal particles, or combinations thereof such that the backing component 120 has a coefficient of thermal expansion that is within 15% of the coefficient of thermal expansion of the encasing material 140; preferably, within 8%; and more preferably, within 3%. The tungsten particles may be of two or more nominal sizes (diameters) to enhance packing efficiency. A material other than tungsten may be incorporated in addition to or instead of tungsten. For example, gold particles may be incorporated into backing component 120. High-density (e.g., approximately the specific gravity of tungsten particles or higher) particles of any type material may be incorporated into the polymer material of backing component 120.

The backing material used in backing component 120 for supporting the crystal (piezoelectric element 110) has a great influence on the performance of an acoustic transducer. Using a backing material with acoustic impedance similar to that of the piezoelectric element 110 will provide the widest operating frequency "bandwidth" for the transducer and will generally provide higher sensitivity (*i.e.,* allow detection of lower amplitude return signals).

A backing material that matches the acoustic impedance of the piezoelectric element 110 is preferred and, in general, the closer the acoustic impendence of the backing material to the piezoelectric element 110, the better the performance of the acoustic transducer. In an actual device, a difference between acoustic impedance of piezoelectric element 110 and acoustic impedance of the backing component 120 may be on the order of 10%, with the backing component 120 typically having the lower acoustic impedance of the two components.

As an example of the acoustic impedance values in an embodiment, when lead-metanoibate ceramic is used as a piezoelectric material, the piezoelectric element 110 has an acoustic impedance of approximately 20 MRayls (20 x 10⁶ Rayls). When lead-titanate-zirconate is used as a piezoelectric material, the piezoelectric element 110 has an acoustic impedance of approximately 30 MRayls. Thus, the backing component 120 preferably has an acoustic impedance equal to or approaching 20 MRayls when lead-metanoibate ceramic is used as a piezoelectric material and equal to or approaching approximately 30 MRayls when lead-titanate-zirconate is used as a piezoelectric material.

A Rayl as used herein has the base units (kg/(s • m²)). MRayl = 1 x 10⁶ Rayls.

The acoustic transducer 100 may also include a impedance matching layer 150 to provide a transition between piezoelectric element 110 and the outside of the transducer (for example, a material contacted by the transducer in a contact mode, such as a steel pipe wall). The matching layer may be comprised of multiple layers and/or a composite material. The matching layer may comprise any material having acoustic impedance between the piezoelectric element 110 and the intended measurement environment. In some embodiments, the matching layer may be a ceramic material, a rubber material, or an epoxy material. The matching layer may incorporate metallic particles into such materials. A wear plate 160 may also be incorporated into acoustic transducer 100 in some embodiments. The wear plate 160 protects transducer components from abrasion or other physical damage.

The impedance matching layer 150 may preferably have a thickness which corresponds to 1/4 of the desired output wavelength of the acoustic signal. A 1/4 wavelength thickness allows waves that are reflected within the matching layer 150 to be in phase with the primary (un-reflected) signal. Matching layer 150 may have any suitable thickness and is not necessarily limited to quarter-wavelength thickness. If a range of acoustic signals are to be output, the matching layer 150 may be sized for either a specific wavelength of interest or according to a midpoint of some portion of the intended output range, for example. The impedance matching layer 150 is preferably placed between the piezoelectric element 110 and the output face of the acoustic transducer 100.

The material of the matching layer 150 is preferably selected to provide a transition from the acoustical impedance of piezoelectric element 110 and the material outside the transducer. Avoiding too abrupt of a transition in acoustical impedance help prevents unwanted reflections of the output signal at the output interface and generally improves output signal strength.

For contact transducers, the matching layer 150 can be made from a material that is between an acoustical impedance of the piezoelectric element 110 and the intended contacted material (e.g., steel of a steel pipe). Immersion transducers may have a matching layer 150 with an acoustical impedance between the piezoelectric element 110 and the immersion fluid (e.g., water or oil). Immersion transducers may incorporate an encasing material 140 that prevents or limits fluid infiltration.

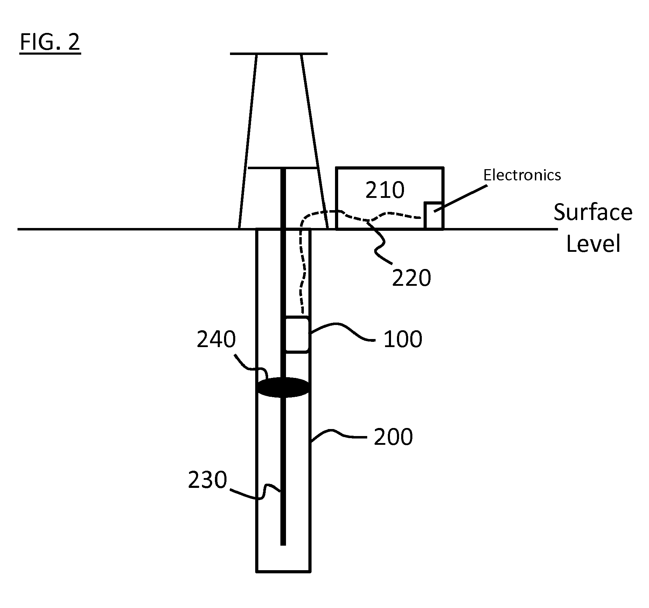

Figure 2 depicts the acoustic transducer 100 deployed in a "down hole" environment. Acoustic transducer 100 is placed within wellbore 200. An electrical connection 220 is made to acoustic transducer 100 from a surface station 210. Electrical current for driving acoustic transducer 100 is supplied via electrical connection 220. The power source for driving acoustic transducer may be a generator, a battery pack, a solar panel, or a combination of power sources. Surface station 210 includes various electronic components for interpreting, displaying, and recording data corresponding to return signals provided by the acoustic transducer 100. For example, a wall thickness of pipe 230 may be determined by signals supplied by acoustic transducer 100 operating in a contact mode according to the detected timing of return signal pulses. In some embodiments, the acoustic transducer 100 could receive electrical power from a power source located downhole with the acoustic transducer 100, such as a battery pack. Communication between acoustic transducer 100 and surface station 210 may use wireless transmission technology rather than, or in conjunction with, wired connections.

In an embodiment, the distance between the acoustic transducer 100 and an expandable packer 240 placed between wellbore segments may be determined by signals supplied by acoustic transducer 100 operating in an immersion mode. The detected distance may be used to determine the extent of expansion of expandable packer 240, which can be used to determine if packer 240 has generated a proper seal between wellbore segments above and below the packer 240.

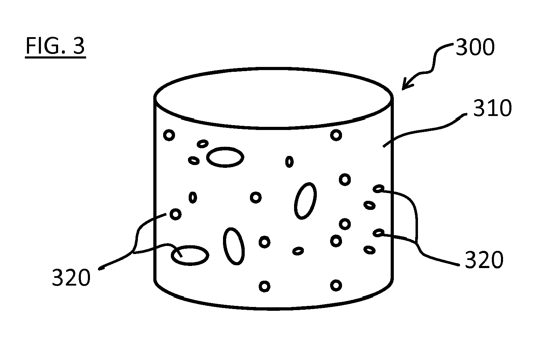

Figure 3 depicts a material 300 that may be used in backing component 120. The material used in backing component 120 may comprise a polymer portion 310 and particulate portion 320. The particulate portion 320 is dispersed within polymer portion 310. Particulate portion 320 may be, for example, metallic particles on the order of 1 micron to 100 microns in nominal dimension. Generally, particulate portion 320 serves to increase the acoustic impedance of backing component 120. Note that the depiction of material 300 is not necessarily to scale. And as noted elsewhere, the particulate portion may, in some embodiments, consist of particles having the same nominal diameter. It is also not necessary that the particles be spherical or generally spherical, but may be any shape, regular or irregular.

The particulate portion 320 may be dispersed within the polymer portion 310 by a milling process or similar method when the polymer portion comprises an elastomeric material. The polymer portion 310 may be melt processable to promote the incorporation of the particulate portion 320.

The polymer portion 310 may comprise a material such as, for example, a fluoroelastomeric material. The polymer portion 310 may comprise a co-polymer (or a combination) of two or more different fluoropolymers. The elastomeric portion 310 may also comprise a perfluorinated polymer or a copolymer of two or more perfluorinated polymers. Assuming suitable phase-compatibility, a mixture of different fluoropolymers and/or perfluoropolymers may be used in elastomeric portion 310.

In some embodiments, the elastomeric portion 310 may comprise co-polymer of vinylidene fluoride (VDF) and hexafluoropropylene (HFP). Several different elastomeric materials incorporating VDF as a monomeric component are sometimes referred to collectively in the art as "FKM" materials. These "FKM" materials are available under various trade names, such as Viton™ and Dyneon FKM™.

In some embodiments, the polymer portion 310 may comprise a fluorine-containing polymer having a Mooney Viscosity ML1 + 10 @ 100°C (212°F) equal to 20 or less Mooney units (MU) as measured in a Mooney scorch test according to ASTM D1646 - Standard Test Methods for Rubber-Viscosity, Stress Relaxation, and Pre-Vulcanization Characteristics (Mooney Viscometer). In this context, "L" designates a "large rotor" on the viscometer, "1" designates the "pre-heat" time in minutes, and "10" designates the time in minutes after the start of the rotor at which the measurement is made. The time at which the measurement is made may be referred to as the "test time." The test temperature is 100°C (212°F).

In general, the Mooney scorch test is a method of measuring a viscosity of a rubber material or a compound using a shearing disk viscometer. This shearing disk may be referred to as a "rotor." Viscosity in MU corresponds to a torque required to rotate the disk while in the measured rubber material or compound. Test sample preparation can conform to industry standards for sample preparation including processing the sample with an initial number of milling passes at a specified temperature and spacing (nip width) of the milling rollers. The specimen to be measured, once prepared, is kept within a die cavity that is heated to a specified temperature for a specified time (pre-heat time). The die cavity may be maintained in a sealed condition by application of a specified pressure. Temperature and pressure conditions of the die cavity may conform to commonly used industry standard temperature and pressures for Mooney viscosity measurement of rubber and/or elastomeric materials.

The polymer portion 310 may also comprise a tertiary co-polymer (terpolymer) of VDF, HFP, and tetrafluoroethylene (TFE). The polymeric material may include perfluoromethylvinylmethylether (PVME) as a component in conjunction with one or more of VDF, HFP, and TFE. Non-fluorinated components may also be included in the polymeric material, such as hydrocarbon components including ethylene and propylene.

The polymer portion 310 is preferably, in an initial state, a readily malleable (low viscosity) material that can be subsequently cured, set, or cooled to a more rigid (higher viscosity) final state. For example, the elastomeric portion 310 may be cured by thermal processing to form crosslinked portions or higher molecular weight portions to thereby increase viscosity. A crosslinking component and/or a crosslinking promoter may be incorporated in the elastomeric portion 310. Various polyamines, diamines, dihydroxy compounds, and peroxides may be used for crosslinking the polymer portion 310. In some embodiments, the polymer portion 310 can have a specific gravity in the range of 1.5 to 1.75, or more specifically approximately 1.6.

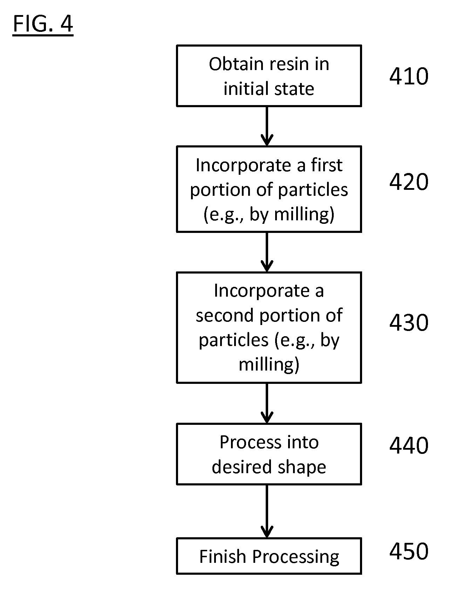

Figure 4 depicts a process flow 400 for forming a backing component for use in an acoustic transducer. In the process depicted in Fig. 4, an elastomeric material, such as a "FKM" rubber material, is processed to incorporate a particulate material, such as tungsten particles, to provide a backing component with improved characteristics, such as a coefficient of thermal expansion that is closer to the coefficient of thermal expansion of the piezoelectric element of the acoustic transducer. Typical values of acoustic impedance of the polymer are between 2 to 3 MRayls; while for the tungsten in particulate form has acoustic impedance about 100 MRayls. The mixture of the polymer and particles can approach a desired acoustic impendence that matches the piezoelectric element 110.

In an initial step 410, a polymer, such as an elastomeric material including a fluoroelastomer, is obtained. The polymeric material in this embodiment increases viscosity via a thermal curing process. That is, after thermal processing, via baking, milling, or other means, the polymeric material has a higher viscosity than the initial state polymer. The polymer may be a fluorine-containing elastomer, thermoset, or thermoplastic material.

In step 420, tungsten particulates are incorporated into the polymer. In this example, tungsten particulates are incorporated into the polymer by a milling process. A first portion of tungsten powder (comprised of tungsten particulates) is dispensed on to the polymer material. The polymer/powder component is passed through rollers of a milling machine. The rollers may or may not be heated and the spacing of between rollers in a vertical direction may be adjusted as deemed appropriate for the overall quantity of polymer being processed in a single batch. The rollers press the powder into polymer to thereby physically incorporate (mix) the particulates into the polymer.

In step 430, a second portion of tungsten powder may incorporated by dispensing the second portion on to the polymer material and passing the polymer/powder component through the rollers of the milling machine (or a second milling machine). The settings of the milling machine may be different from or the same as those used in step 420.

Steps 420 and 430 may be repeated several times until a desired or otherwise suitable amount of particulate is incorporated into the polymer. The first portion of tungsten powder may include particulates having a nominal diameter that is different from a nominal diameter of the particulates in the second portion of the tungsten powder. That is, particulates of at least two different sizes can be incorporated into the polymer. In general, it is thought the particulate packing density may be improved with use of different diameter particulates. The process may be modified to include only a single nominal particulate size or three or more nominal particulate sizes. In some embodiments, the tungsten powder may comprise a mixture of particles with two or more nominal particulate sizes. That is, different particle sizes may be incorporated using a single step (e.g., step 420 or step 430).

In some embodiments, a first portion of particulates may have a different nominal shape than a second portion of particulates. In these instances the first and second portions may have the same or different nominal sizes.

The polymer material may be preferably folded upon itself prior to passing through the milling machine rollers. That is, tungsten powder can be dispensed on to a surface of the polymer material, which is then folded, placing the powdered surface between different portions of the polymer material.

In step 440, the polymer/powder material may be processed into a desired shape after the desired or suitable amount of particulate is incorporated into the polymer. The desired shape generally corresponds to the size and shape requirements of a backing component (such as backing component 12) to be included in an acoustic transducer (such as acoustic transducer 100). In this example, the polymer/powder material is processed into the desired shape by a molding process. For example, the polymer/powder material (or portions thereof) may be placed in a hot-press mold and molded into the desired shape using any suitable temperature, pressure, and molding time.

In step 450, the molded polymer/material may be finish processed into a backing component by, for example, machining the material to within desired dimensional tolerances, polishing surfaces to a desired flatness, and/or cleaning surfaces to remove residues or stray particulates.

When the backing component is completed, it may be incorporated into an acoustic transducer by affixing the backing component to a backside surface of a piezoelectric element. Affixing of the backing component may be accomplished by a variety of means such as by gluing or physically clamping the backing component to the backside of a piezoelectric component. As described with respect to acoustic transducer 100, the backing component and the piezoelectric element may subsequently be encased in an epoxy resin.

The mixing of metal particles, such as tungsten particles, into a fluorine-containing polymer can be performed in a variety of ways. When the polymer is a melt-processable thermoplastic, the metal particles may be mixed into the polymer melt before (or during processing). Metal particles may be spray coated onto the surface of the polymer then particulate-coated polymer material can be further processed and molded. In some embodiments, the polymer may be spray coated onto the metal particles and then the polymer/particle mixture can be further processed and molded. If the polymer is available as a powder, the polymeric powder and the metal particles can be dry blended before molding/processing. The polymer can be ground into the small particles and mixed with the metal particles during the grinding process. The polymeric particles and the metal particles can be generated by a grinding process performed on both the polymer and metal materials at the same time.

### First Example

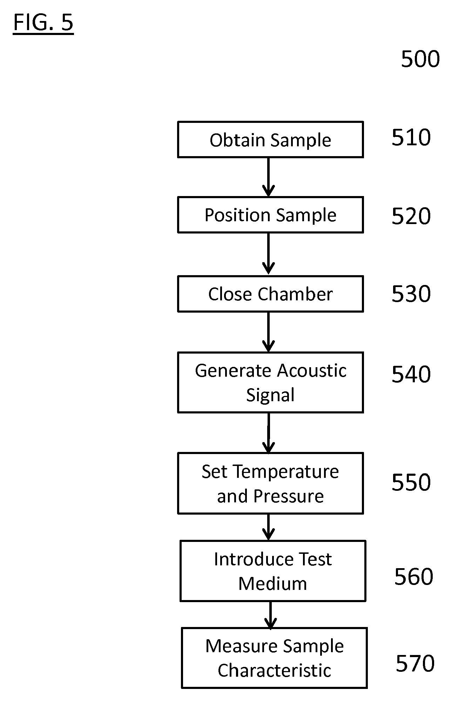

Figure 5 depicts an example process flow of a method 500 for monitoring the deformation of a non-metallic sample using an acoustic signal. The acoustic signal can be generated by an acoustic transducer 100 described above, for example. In this embodiment, a sample is monitored in a chamber allowing the simulation of downhole conditions. In other embodiments, the deformation of the sample may be monitored in an actual downhole environment, as depicted in Figure 2. The deformation can be tracked by the measurement of one or more characteristic of the sample, such as a dimension or a modulus.

In addition to use of an acoustic signal to monitor a characteristic of the sample, additional probes or sensors may be incorporated. For example, a spectrographic probe may be used to monitor the chemical environment of the sample or the chemical composition of the sample itself. Two or more acoustic sensors (e.g., acoustic transducers 100) may be incorporated to allow monitoring of multiple characteristics of the sample, for example, dimension changes for different portions of the sample or in different directions.

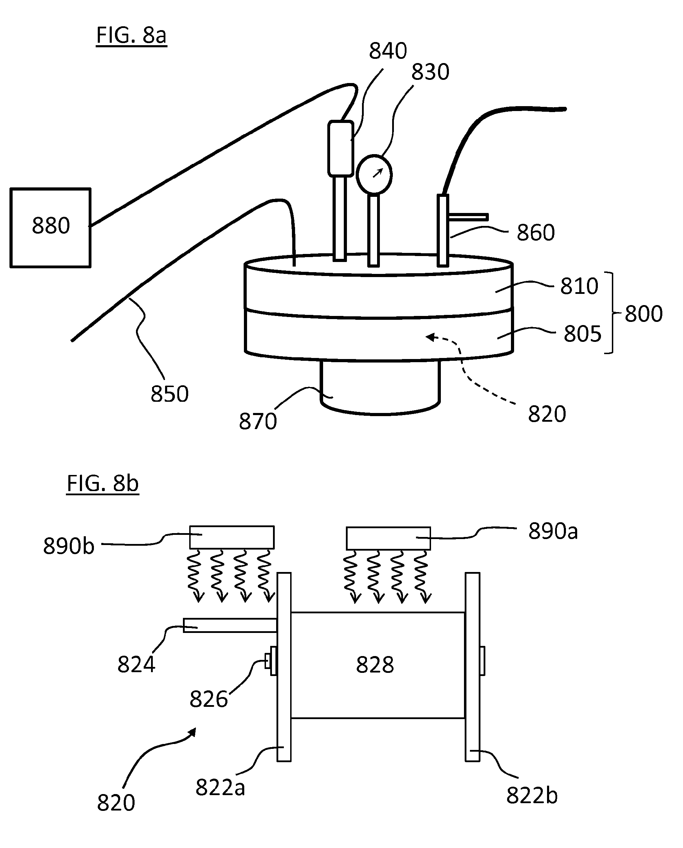

As an initial step, a sample to be tested is obtained (element 510) and then positioned (element 520) in a sealable chamber. The sealable chamber may be as depicted in Fig. 8a and Fig. 8b or may be of another appropriate design. The initial characteristics of the sample may optionally be measured prior to positioning the sample in the chamber. For example, physical measurements of sample dimensions can be made using, for example, rulers, calipers, or other measurement techniques performed outside of the chamber. In another example, initial measurements may be made on the sample after the sample is positioned, but before the chamber is sealed.

After the sample is positioned, the chamber can be sealed (element 530). An acoustic signal provided ("generated," element 540) by an acoustic transducer is then used to monitor ("measure," element 570) a characteristic of the sample. The characteristic may be a dimension in a given direction or may be a modulus of the sample. A dimension of the sample can be determined with the acoustic signal by monitoring detected reflection times. Signal reflection times change with distance of the surface(s) of the sample from the acoustic transducer. The modulus of the sample can be determined by monitoring the speed of the acoustic signal through the sample, with generally a lower modulus corresponding to a slower acoustic signal speed. Modulus may also be determined by the vibratory response of the sample to the acoustic signal.

The sealed chamber can be brought to a controlled temperature (element 550). The temperature may be altered using resistive heating elements, heat exchangers, ovens, furnaces, heat lamps, or the like. For example, the entire chamber could be placed in an oven or furnace. The controlled temperature may be a constant temperature or may vary with time. Temperature control may involve use of temperature sensors inside or outside the chamber and computerized controller units.

While downhole temperatures are generally higher than surface conditions, the controlled temperature could also be lower than, for example, 25 °C. In such a case, the temperature may be altered using heat exchangers, refrigerating the chamber, immersion in ice, or the like.

The sealed chamber can be brought to a controlled pressure (element 550). The pressure may be altered by supplying compressed gases or fluids. The pressure may be controlled with valves, pumps, or compressors. The controlled pressure may be a constant pressure or may vary with time. Pressure control may involve use of pressure sensors and computerized controller units. As is well known in the art, pressure inside a sealed chamber may be a function of temperature, thus pressure control may also involve controlling or monitoring temperatures.

While downhole pressures are generally higher than surface conditions, the controlled pressure could also be a pressure lower than atmospheric pressure (1 atm). In such a case, the pressure may be altered using vacuum pumps and the like.

After the sample is positioned in the chamber, the sample can be monitored with the acoustic signal either constantly or periodically. The sample can be monitored while the controlled temperature and/or controlled pressure are/is being established or only after the controlled temperature and/or controlled pressure are/is established.

A test fluid (liquid or gas or combinations thereof) may be introduced (element 560) into the chamber either before or after the chamber is sealed. The test fluid may be introduced before or after the chamber is at a controlled temperature or pressure. The chamber may receive a single charge of test fluid or test fluid may be flowed continuously through the chamber. In addition, test fluid can be extracted or removed as required. For example, test fluid may be introduced or removed as required to maintain desired pressure conditions in the sealed chamber. Generally, the sample is immersed in the test fluid, that is, the sample is covered by the test fluid, but this is not absolutely required and the chamber may be designed or operated such that only a portion of the sample is in contact with the test fluid. The temperature of the test fluid may be controlled in conjunction with chamber temperature.

The test fluid may correspond to an expected chemical environment in a wellbore location. For example, the test fluid could be petroleum or natural gas. The test fluid could be water or a brine solution. As minor variations in fluid composition could potentially make significant differences in sample material behavior, the test fluid could be drawn from a specific wellbore of interest at a specific depth of interest. Alternatively, a more generic test fluid can be used - for example, vegetable oil could be used as a less volatile (and less dangerous) stand-in for crude oil. The test fluid can include suspended solids, which may, for example, be components of a drilling mud.

Monitoring of the sample using an acoustic signal may involve an integrated acoustic signal generator and sensor (e.g., an acoustic transducer such as acoustic transducer 100) or the acoustic signal may be generated at a location that is not the same as the sensor location. For example, the acoustic sensor system could be operated in a transmission mode with the signal generator opposite the signal sensor with the sample placed in between. A reflection mode system where the signal generator and sensor are placed at an angle to each other that is greater than 0° but less than 180° may be used.

The frequency of the acoustic signal generated may be in the ultrasonic frequency range (above 20 kHz). The acoustic signal may also be in the audible range or less. The acoustic signal may be a discrete frequency or encompass a range of frequencies. The frequency of the signal may be constant or scanned through a range or a band.

The method may encompass the use of multiple acoustic sensors monitoring a single sample and the use of multiple sensor monitoring separate samples in the same chamber.

The specific ordering of the steps of the method is generally not critical. For example, in some embodiments, the acoustic signal may be generated before or after the chamber is sealed or the temperature/pressure has been set. In some embodiments, the sample may be positioned after the chamber is sealed or after the temperature or pressure has been set. Additionally, the sample may be repositioned after a measurement of a characteristic.

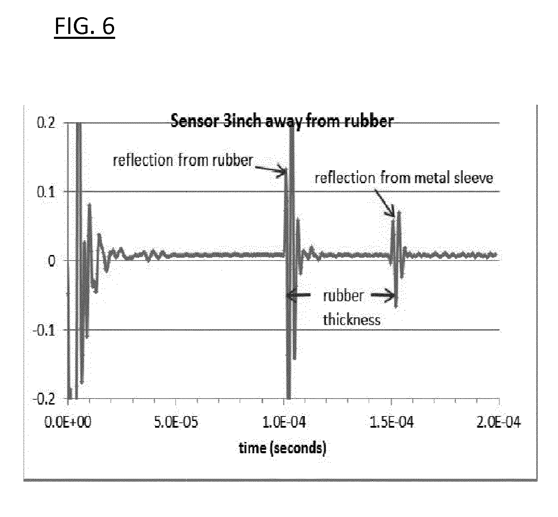

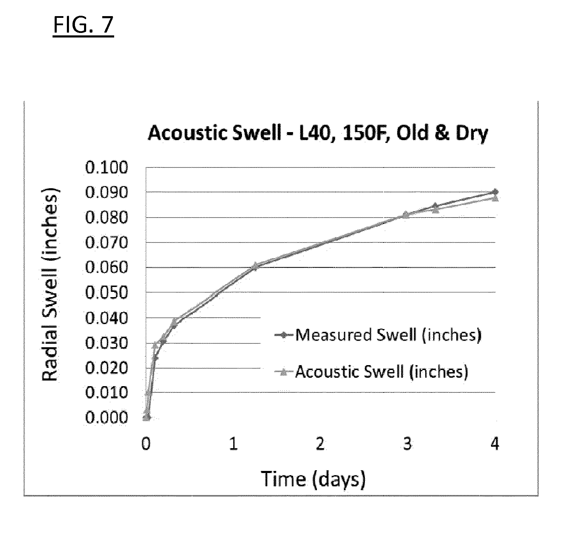

In Figure 6, a measurement result from a sample is depicted. The measurement is from a reflection mode system. The distance from the sensor to the sample surface can be determined by a reflection from the sample surface. If an initial distance of the sample from the sensor is known, then changes in thickness can be determined using only the reflection from the sample surface, assuming test conditions do not change appreciably. But to accurately determine the distance from the sensor to the specimen when pressure, temperature, and/or test fluid composition changes, the acoustic impedance of the test fluid must be known. The acoustic impedance of the test fluid can be determined *in-situ* by reflecting a signal off of a reference shelf positioned at a known and constant distance from the sensor. For example, if the sample swells when exposed to the test fluid, then the distance to the sensor will decrease allowing one to calculate the change in specimen thickness. Repeated distance measurements may be made over time or with changing conditions to track the response of the sample. For example, the chamber may be filled with a test fluid and placed at constant temperature and pressure and changes in sample thicknesses over multiple days may be monitored, as depicted in Fig. 7 showing a comparison of sample swell (change in thickness in a radial sample direction) as measured using physical techniques (calipers) and acoustic reflectance measurements over four days.

Though in this example embodiment a thickness of the sample is the monitored characteristic, other things such as the modulus of the sample may be monitored instead of or in addition to the thickness. Thickness may be monitored directly or may correspond to a measurement of sample surface location.

Measurement of the modulus can be made using a sample with a known thickness so that the speed of sound (acoustic energy) through the sample can be determined. In some instances, the acoustic signal generator could be placed in direct contact with the sample to measure sample modulus. A p-wave (primary wave) can also be used to monitor changes in modulus when the sample is exposed to a gas, such as hydrogen sulfide (H₂S), for example. When the sample is exposed to a liquid dimension changes can be monitored.

Also, though described as a thickness in this example, any physical dimension may be monitored as the sample characteristic. That is, a width, a length, a height, a diameter, or the like may be monitored as the sample characteristic. The sample characteristic may be a distance of a sample surface from the acoustic signal generator. The sample characteristic may correspond to a deformation or movement of the sample. Deformation of a specimen due to swelling, shape-memory responses, inflation, or mechanical loading can be monitored by measuring changes in the reflection times between the sensor and the specimen.

### Second Example

Example details of an apparatus for measuring deformation of non-metallic materials are described with reference to Fig. 8a and Fig. 8b. In this embodiment, the apparatus may be a laboratory test bed for studying the response of non-metallic materials to simulated downhole conditions. As depicted in Figure 8a, the apparatus comprises a sealable chamber 800 with one or more ports (e.g., an opening) through which wires, tubes, sensors, or the like may pass through the chamber wall. Here, the sealable chamber 800 is depicted as circular structure, but the chamber may be of any shape. As depicted, the sealable chamber 800 is formed of a body 805 and a lid 810, though the chamber 800 could also be formed of a single body with an access door/panel providing for inserting a sample into the chamber. The lid 6810 can be bolted to the body 805 using a plurality of bolts or other fasteners. The depicted lid 810 has multiple ports, though not depicted here body 805 may also have a port or ports. An analog pressure gauge 830 is attached to a port. Wire leads 850 for one or more acoustic sensors are passed through a port. Wire leads 850 for one or more thermocouples are also passed through a port. A digital pressure sensor (transducer) 840 may also be incorporated into the apparatus with associated leads and/or tubes passed through a port.

Once appropriately sealed, the chamber 800 can be pressurized. The apparatus may include a pressure control system (which may incorporate a controller 880) to control the pressure of the chamber. For example, the chamber can be pressurized to approximately 1700 psi, between 500 psi and 4,000 psi, or between 0 psig and 6,500 psi or higher if appropriately designed. The chamber 800 can be designed for vacuum operations if deemed necessary.

The chamber 800 holds a sample holder 820. A sample holder 820 is depicted in Figure 8a as within the sealed chamber and in a standalone view in Fig. 8b. The sample holder 820 is designed to hold the sample 828 substantially stationary during measurement made using an acoustic transducer 890a (which may correspond to an acoustic transducer 100). For example, the sample 828 may be a donut-shaped sample and can be held by a pin, rod, clamp, screw, or bolt (fastener) 826 extending through the interior void of the donut-shaped sample 828 from plate 822a to plate 822b. Of course, the sample need not be donut-shaped and other shapes may be incorporated. For example, block samples can be held between plates using one or more fastener 826 located proximate to a corner of the block sample.

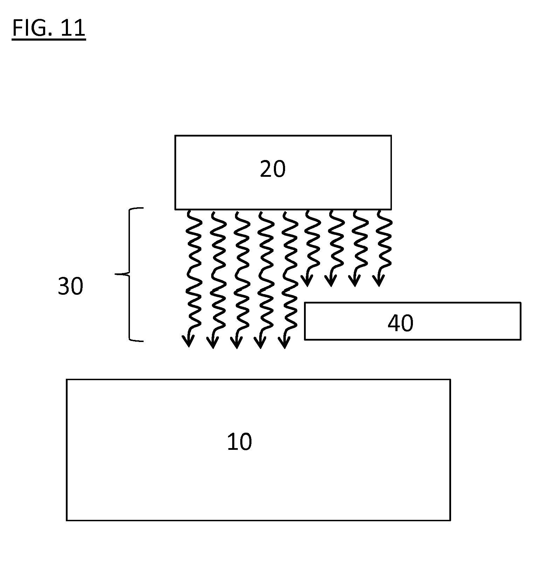

A flange (reference plate) 824 is, in this embodiment, attached to a surface of plate 822b. The reference plate 824 is positioned at a known distance from an acoustic transducer 890b. With the depicted arrangement, a reference signal can be acquired from acoustic transducer 890b can be used to calibrate a signal from acoustic transducer 890a that is positioned to acquire measurements on sample 828. This depicted arrangement requires at least two acoustic transducers 890 to be incorporated into the apparatus. The physical separation between acoustic transducers 890a and 890b may cause the acquired signals to be obtained under somewhat different conditions, which may affect calibration accuracy when not properly accounted for during the sample measurement process. Figure 11, discussed below, describes a modified embodiment of an apparatus that allows the reference signal and the measurement signal to be acquired under the same conditions using a single acoustic transducer 890 (corresponding to element 20 in Fig. 11).

The chamber 800 may incorporate various safety features such as pressure relief valves. Additionally, it may be preferable to purge the sealed chamber of oxygen to limit the potential for ignition of flammable test fluids within the chamber. The purge gas may be, for example, nitrogen or an inert gas such as argon.

The test fluid may be added to the chamber either prior to sealing or via a fluid port 860 after sealing. The test fluid may be any fluid of interest, for example, crude oil, hexane, water, salt solutions, or natural gas. The test fluid may be a mixture of components and may also incorporate dissolved or suspended solids, such as, for example, drilling mud.

In many instances the test fluid will be highly corrosive to certain materials. To limit corrosion of the chamber interior, it may be preferable to coat the interior surfaces with a protective coating - for example, a phenolic resin or the like may be used.

The apparatus may include a thermal control component (temperature control system) to bring the temperature of the test fluid to a controlled temperature. The controlled temperature will generally by a temperature above room temperature when simulating downhole conditions, and thus the thermal control component would incorporate a heater unit, but the apparatus may also be used simulate less than room temperature conditions, if the desired. In such instances, the thermal control component would incorporate a cooling unit. The thermal control component may include resistive heating elements, combustion systems, heat lamps, heat exchangers, refrigeration units, or the like. The thermal control component may incorporate a controller 880.

The apparatus may additionally include a data acquisition component. The data acquisition component may be configured to continuously or periodically acquire data from one or more sensors, such as thermocouples, pressure transducers, and/or acoustic sensors. The data acquisition component may include a data logger to store data acquired from the sensors over a period of time. The data acquisition component may comprise special-purpose electronic components or may be implemented in a computer system running specialized software. The computer system may operate over, or in conjunction with, a computer network, including the Internet.

The apparatus may additionally include a control component. The control component may be used to control the temperature and/or pressure of the in the sealed chamber by, for example, the operation of valves and/or the thermal control component. The control component may comprise special-purpose electronic components, for example, microcontroller units, or may be implemented in a computer system running specialized software. The computer system may operate over, or in conjunction with, a computer network, including the Internet. The data acquisition component and the control component may optionally be implemented in the same computer system.

### Third Example

Example details of an apparatus for measuring deformation of non-metallic materials are described. In this embodiment, the apparatus may be used for studying the response of non-metallic materials to simulated downhole conditions.

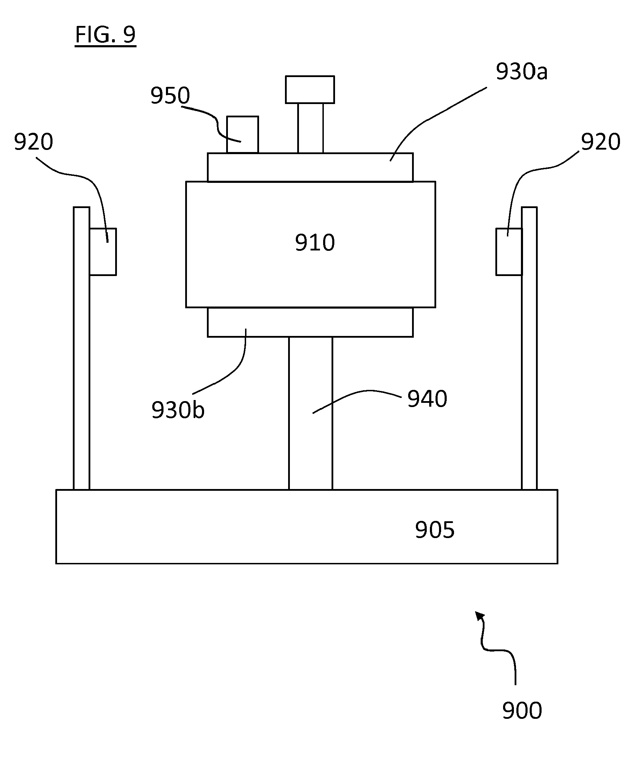

Figure 9 depicts a sample holder 900 and an arrangement of acoustic sensors (transducers) 920. The test sample 910 is depicted as a doughnut-shaped sample. A base plate 905 has pin or threaded rod (a sample pin) 940 extending in a direction perpendicular to the base plate 905. The sample 910 is placed on the sample pin 950. An upper and a lower sample plate (930a and 930b, respectively) are used to secure the sample 910. The upper sample plate 930a may optionally be allowed to move up or down according to the expansion/contraction of the sample 910. The upper (930a) and lower (930b) sample plate may optionally each incorporate an opening for an acoustic sensor 950 for measuring vertical compliance (thickness changes) and a dynamic elastic bulk modulus. As depicted in Figure 9, the apparatus has two radial acoustic sensors 920 and a vertical acoustic sensor 950, though additional radial sensors 920 and additional vertical acoustic sensors 950 are contemplated. In general, a greater or less number of sensors 920/950 can be used as desired; though increasing the number of sensors may complicate acquisition of signals due to possible cross-talk and noise effects. Additionally, each sensor will generally have separate leads, which must be passed through the sealable chamber wall.

The sample holder 900 depicted in Figure 9 could, if desired, be incorporated into a chamber 800 described in connection with Figure 8a.

### Fourth Example

Example details of an apparatus for measuring deformation of non-metallic materials are described. In this embodiment, the apparatus may be used for studying the response of non-metallic materials to simulated downhole conditions.

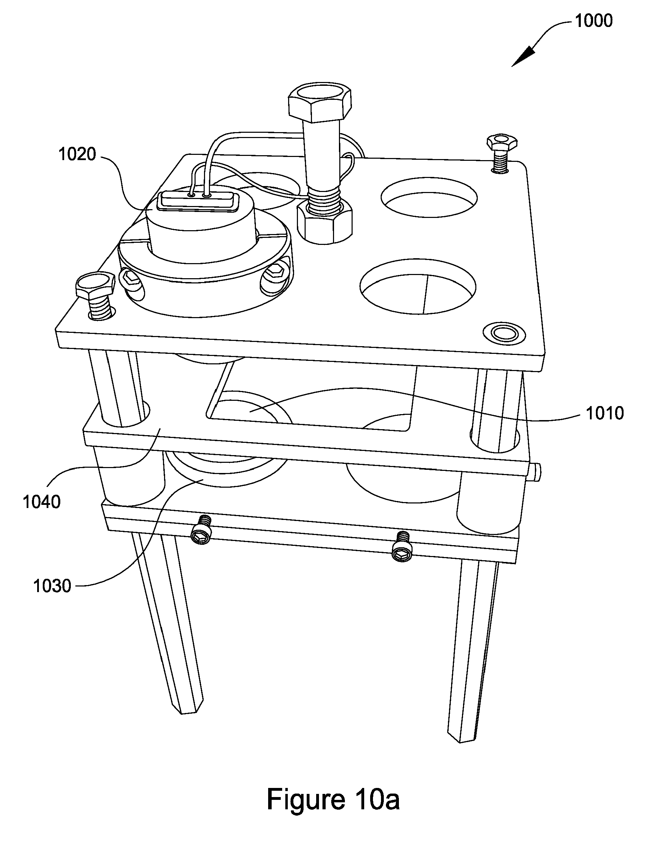

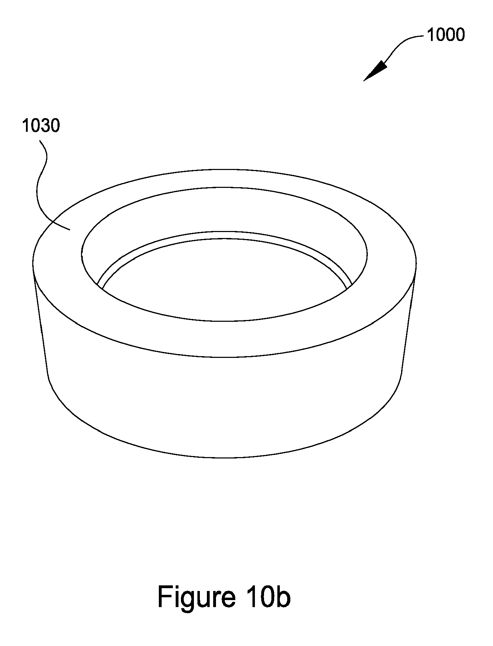

Figure 10 depicts a portion of another embodiment of an apparatus for measuring deformation of materials. Here, instead of a donut-shaped sample, the sample 1010 is a disk (sometimes referred to as a button) of material which fits into a sample cup 1030. A single or multiple sample cups 1030 could be positioned in a sealable chamber as described in relation to the first embodiment. Each sample cup 1030 could have dedicated acoustic transducer 1020, or if desired a single acoustic transducer 1020 could be mechanically positioned above each sample cup 1030 in turn, though this would be expected to result in a relatively complex apparatus.

The sample holder 1000 depicted in Figure 10a depicts three sample cup 1030 positions and a fourth reference signal position, which could be an empty sample cup 1030. The reference signal reflection can be compared to the three sample signals to allow thickness changes to be measured. The number of sample cup positions is not limited to three. Any number of positions may be used. Figure 10b depicts an example of a sample cup 1030 used in some embodiments. The sample placed in each sample cup may be a different material for testing. That is, multiple sample types may be tested simultaneously in the chamber 800 adopting the sample holder 1000 depicted in Figure 10a.

A thinner sample disk-shaped sample, as used in this embodiment, would be expected to stabilize sooner than the relatively thick donut-shaped samples described above. This might be useful for making quicker comparisons between materials. Thinner samples may also allow for a smaller, lighter sealable chamber. A smaller, lighter chamber could potentially be easier to incorporate into a mobile apparatus that might be placed at, for example, a drill site.

Instead of simply placing a sample disk 1010 in a sample cup 1030, the sample disk 1010 can be bonded to the sample cup 1030. Alternatively, the sample cup can incorporate a compression ring or a capping mechanism that holds the sample disk 1010 in the sample cup 1030. The capping mechanism may be, for example, a ring which overlaps an edge portion of the disk. The capping mechanism can be bolted or screwed into the sample cup, for example. Bonding or use of a compression ring or capping mechanism may be useful when the specific gravity of the test fluid is greater than the sample. Under such conditions, the sample would float and might not remain in the sample cup.

### Other Embodiments

Disclosed methods for determining deformation of non-metallic materials may be implemented, fully or partially, as computer software programs stored in non-transitory, computer-readable media. Where computer control is possible, such control may be made via a network (including the Internet).

As depicted in Figure 11, the apparatus used to monitor deformation may incorporate a reference half-shelf (reference plate) 40. The reference half-shelf 40 is a metal plate that extends partially into the signal path of an acoustic sensor (transducer) 20. Part of the acoustic signal hits the half-shelf 40 and reflects back to the acoustic sensor 20 and part of the acoustic signal hits the test sample 10 and reflects back. The reference half-shelf 40 provides a reference signal from a known distance from the same acoustic sensor performing the sample measurement. Use of a reference half-shelf 40 can eliminate the need for a separate reference sensor and the need to calibrate each acoustic signal separately to the reference sensor. The reference half-shelf 40 may be combined with embodiments discussed above.

Instead of placing a test sample in a sealable chamber to be monitored by an acoustic sensor, an acoustic sensor could be placed downhole at a location of a packer deployment within the wellbore and the acoustic sensor could monitor characteristics (e.g., thickness or modulus) *in situ.* In yet another embodiment, the acoustic sensor may be used to monitor a characteristic of an expandable device such as an expandable tubular device or packer. In one example, the sensor may be used to monitor the amount of radial expansion experienced by the expandable tubular device. The expandable tubular device may be expanded using a cone, a roller, hydraulic pressure, and combinations thereof.

Embodiments of an apparatus for measuring deformation of non-metallic materials may incorporated into a mobile platform or platforms. For example, a sample holder and acoustic transducer may be incorporated in a carrying case that may be transported to test site locations, such as wellbore locations. In some embodiments, the carrying case may be briefcase size. In some embodiments, the carrying case may be less than three feet long, three feet wide, and two feet deep. In some embodiments, the carrying case may be transportable by a single person of approximately average strength and may, optionally, incorporate handles and/or wheels. A sealable chamber may be incorporated into a mobile platform with the sample holder and acoustic transducer or may comprise a separate element that may be transported separately and combined with other components at the test site. A control system for the acoustic transducer may be incorporated into a mobile platform or may comprise a separate element, which may be combined with other components at the test site.

In an embodiment, a method of measuring deformation of a non-metallic material includes: obtaining a sample of a non-metallic material; placing the sample in a sealable chamber; sealing the sealable chamber; generating an acoustic signal; adjusting the sealable chamber to approximate a downhole condition; and measuring a characteristic of the sample using the acoustic signal. In some variants of the method, the downhole condition is selected from the group consisting of a downhole pressure, a downhole temperature, a downhole medium, and combinations thereof. In some variants, the non-metallic material is a polymer, which can be an elastomeric material in additional variants. In some embodiments the non-metallic material is swellable, such as a swellable packer. The characteristic that is measured can be a thickness of the sample. The characteristic that is measured can be a distance of a surface of the sample from an acoustic transducer used for generating the acoustic signal. The test temperature, test pressure, and test medium can be set to approximate a downhole condition of a wellbore.

Acoustic transducers of embodiments described herein or fabricated using methods described herein may be incorporated in any application for which an acoustic transducer is required. Such applications include, without limitation, use in test stands for evaluating material(s) in simulated downhole conditions, monitoring of wellbore apparatus or components in downhole environments, pipeline thickness measurements. Acoustic transducers of embodiments described herein or fabricated using methods described herein can reduced mismatch in component thermal coefficients of expansion and as such may be particularly advantageous in applications where the transducer is exposed to repeated thermal cycling or thermal extremes, such as found in test bed equipment used to simulate downhole environments or in downhole environments.

In one embodiment, an acoustic transducer includes a piezoelectric element configured to generate acoustic signals according to an electrical signal that is applied to the piezoelectric element; a backing component contacting a back-side surface of the piezoelectric element; and an encasing material that surrounds the piezoelectric element and the backing component, wherein the backing component comprises a fluorine-containing polymer in which metal particles are incorporated. In some embodiments the metal particles comprise greater than 40% of the backing component by volume.

In another embodiment, a backing component for use in an acoustic transducer includes a fluorine-containing polymer; a plurality of metal particles dispersed in the fluorine-containing polymer, wherein the metal particles comprise greater than 60% of the backing component by volume.

In another embodiment, a method of manufacturing an acoustic transducer includes placing a metal powder on a surface of fluoroelastomeric resin material; mixing the metal powder into the fluoroelastomeric resin material; forming the fluoroelastomeric resin material including the metal powder into a backing component; and affixing the backing component formed of the fluoroelastomeric resin material including the metal powder to a piezoelectric material.

In one or more of the embodiments described herein, the metal is tungsten.

In one or more of the embodiments described herein, the metal particles comprise greater than 65% of the backing component by volume.

In one or more of the embodiments described herein, the metal particles comprise between 65% and 70% of the backing component by volume.

In one or more of the embodiments described herein, the metal particles comprise 70% or greater of the backing component by volume.

In one or more of the embodiments described herein, the fluorine-containing polymer is a fluoroelastomer that comprises a di-polymer of vinylidene fluoride and hexafluoropropylene having a Mooney viscosity of less than 20 Mooney units as measured in a Mooney scorch test using a large rotor, a one minute preheat time, a ten minute test time, and a 100 °C test temperature.

In one or more of the embodiments described herein, the fluorine-containing polymer comprises a perfluoroelastomer having a Mooney viscosity of less than 20 Mooney units as measured in a Mooney scorch test using a large rotor, a one minute preheat time, a ten minute test time, and a 100 °C test temperature.

In one or more of the embodiments described herein, the fluorine-containing polymer comprises a terpolymer of vinylidene fluoride, hexafluoropropylene, and tetrafluoroethylene having a Mooney viscosity of less than 20 Mooney units as measured in a Mooney scorch test using a large rotor, a one minute preheat time, a ten minute test time, and a 100 °C test temperature.

In one or more of the embodiments described herein, the fluorine-containing polymer includes perfluoromethylvinylmethylether as component.

In one or more of the embodiments described herein, the metal particles are of at least two different nominal shapes or sizes.

In another embodiment, a method of incorporating metal into a fluoropolymer to make a backing material includes mixing a metal into a melt processable fluoropolymer; and forming the mixture of the metal and the fluoropolymer into a desired shape.

In another embodiment, a method of incorporating metal into a fluoropolymer to make a backing material includes spraying a fluoropolymer onto a metal; and forming the metal with the fluoropolymer sprayed thereon into a desired shape.

In another embodiment, an apparatus for measuring deformation of a non-metallic material, includes: a sealable chamber including a port for introducing a test medium; a sample holder for holding a sample of a non-metallic material inside the sealable chamber; a temperature control system for controlling a temperature of the sealable chamber; a pressure control system for controlling a pressure of the sealable chamber; and an acoustic transducer positioned to supply an acoustic signal to the sample in the sample holder when the sealable chamber is sealed.

In an embodiment, an acoustic transducer comprises: a piezoelectric element configured to generate acoustic signals according to an electrical signal that is applied to the piezoelectric element; a backing component contacting a back-side surface of the piezoelectric element; and an encasing material that surrounds the piezoelectric element and the backing component, wherein the backing component includes a fluorine-containing polymer containing metal particles in an amount greater than 40%, for example, 60% or more, of the backing component by volume, and fluorine-containing polymer is selected from the group consisting of: a.) a terpolymer of vinylidene fluoride, hexafluoropropylene, and tetrafluoroethylene having a Mooney viscosity of less than 20 Mooney units as measured in a Mooney scorch test using a large rotor, a one minute preheat time, a ten minute test time, and a 100 °C test temperature; b.) a fluoroelastomer that comprises a di-polymer of vinylidene fluoride and hexafluoropropylene having a Mooney viscosity of less than 20 Mooney units as measured in a Mooney scorch test using a large rotor, a one minute preheat time, a ten minute test time, and a 100 °C test temperature; and c.) a perfluoroelastomer having a Mooney viscosity of less than 20 Mooney units as measured in a Mooney scorch test using a large rotor, a one minute preheat time, a ten minute test time, and a 100 °C test temperature.

While the foregoing is directed to example embodiments of the present disclosure, other and further embodiments of the present disclosure may be devised without departing from the basic scope thereof, and the scope thereof is determined by the claims that follow.

## Claims

1. A method of measuring deformation of a non-metallic material, comprising:
placing a sample (828) of a non-metallic material in a sealable chamber (800);
sealing the sealable chamber (800);
generating an acoustic signal;
bringing the sealable chamber (800) to a test pressure;
bringing the sealable chamber to a test temperature;
supplying a test medium to the sealable chamber; and
measuring a characteristic of the sample (828) using the acoustic signal.

2. The method of claim 1, wherein the test medium is a hydrocarbon fluid.

3. The method of claim 1 or 2, wherein the characteristic is a modulus of the sample.

4. The method of any of claims 1 to 3, wherein the acoustic signal is generated by an acoustic transducer (100); and optionally,
wherein the acoustic transducer (100) comprises:
a piezoelectric element (110) configured to generate acoustic signals according to an electrical signal that is applied to the piezoelectric element;
a backing component (120) contacting a back-side surface of the piezoelectric element (110); and
an encasing material (140) that surrounds the piezoelectric element and the backing component,
wherein the backing component (120) comprises a fluorine-containing polymer (310) in which metal particles (320) are incorporated, and
the metal particles (320) comprise greater than 60% of the backing component (120) by volume.

5. The method of claim 4, further comprising positioning an acoustic reflecting plate (40) between the acoustic transducer (20) and the sample (10) such that only a first portion of the acoustic signal generated by the transducer (20) reaches the sample (10) and a second portion of the acoustic signal generated by the transducer (20) is reflected back to the acoustic transducer (20) by the acoustic reflecting plate (40).

6. An apparatus for measuring deformation of a non-metallic material, comprising:
a sealable chamber (800);
a sample holder (820) for holding a sample (828) of a non-metallic material inside the sealable chamber (800);
a port (860) for introducing a test medium; and
an acoustic transducer (890a) positioned to supply an acoustic signal to the sample.

7. The apparatus of claim 6, wherein a temperature and a pressure inside of the sealable chamber (800) is adjustable.

8. The apparatus of claim 6 or 7, wherein the acoustic transducer (890a, 100) comprises:
a piezoelectric element (110) configured to generate acoustic signals according to an electrical signal that is applied to the piezoelectric element;
a backing component (120) contacting a back-side surface of the piezoelectric element (110); and
an encasing material (140) that surrounds the piezoelectric element (110) and the backing component (120),
wherein the backing component (120) comprises a fluorine-containing polymer (310) in which metal particles (320) are incorporated, and
the metal particles (320) comprise greater than 60% of the backing component (120) by volume.

9. The apparatus of claim 8, wherein the fluorine-containing polymer (310) is selected from the group consisting of:
a. a terpolymer of vinylidene fluoride, hexafluoropropylene, and tetrafluoroethylene having a Mooney viscosity of less than 20 Mooney units as measured in a Mooney scorch test using a large rotor, a one minute preheat time, a ten minute test time, and a 100 °C test temperature;
b. a fluoroelastomer that comprises a di-polymer of vinylidene fluoride and hexafluoropropylene having a Mooney viscosity of less than 20 Mooney units as measured in a Mooney scorch test using a large rotor, a one minute preheat time, a ten minute test time, and a 100 °C test temperature; and
c. a perfluoroelastomer having a Mooney viscosity of less than 20 Mooney units as measured in a Mooney scorch test using a large rotor, a one minute preheat time, a ten minute test time, and a 100 °C test temperature.

10. The apparatus of any of claims 6 to 9, wherein the sealable chamber (800) comprises a body (805) and lid (810), and optionally,
wherein the sample holder (1000) includes a plurality of sample cups (1030).

11. The apparatus of any of claims 6 to 10, further comprising:
an acoustic reflecting plate (1040) positioned between the acoustic transducer (1020) and the sample holder such that only a first portion of the acoustic signal generated by the acoustic transducer (1020) reaches the sample holder and a second portion of the acoustic signal generated by the transducer (1020) is reflected back to the acoustic transducer (1020) by the acoustic reflecting plate (1040); and optionally,
wherein the apparatus comprises a plurality of acoustic transducers.

12. A method of measuring a downhole characteristic, **characterised by**:
placing an acoustic transducer (100) in a wellbore (200); and
using the acoustic transducer (100) to measure the characteristic of a portion of a downhole device (240), wherein the acoustic transducer (100) comprises:
a piezoelectric element (110) configured to generate acoustic signals according to an electrical signal that is applied to the piezoelectric element;
a backing component (120) contacting a back-side surface of the piezoelectric element; and
an encasing material (140) that surrounds the piezoelectric element (110) and the backing component (120),
wherein the backing component (120) comprises a fluorine-containing polymer (310) in which metal particles (320) are incorporated, and
the metal particles (320) comprise greater than 60% of the backing component by volume.

13. The method of claim 12, wherein the downhole device (240) comprises a packer.

14. An acoustic transducer (100), comprising:
a piezoelectric element (110) configured to generate acoustic signals according to an electrical signal that is applied to the piezoelectric element (110);
a backing component (120) contacting a back-side surface of the piezoelectric element (110); and
an encasing material (140) that surrounds the piezoelectric element (110) and the backing component (120),
wherein the backing component (120) includes a fluorine-containing polymer (310) containing metal particles (320) in an amount greater than 40% of the backing component by volume.

15. A backing component (120) for use in an acoustic transducer (100), comprising:
a fluorine-containing polymer (310);
a plurality of metal particles (320) dispersed in the fluorine-containing polymer (310), wherein the metal particles (320) comprise greater than 60% of the backing component (120) by volume.
